# EUROPEAN PATENT APPLICATION

(11) **EP 2 216 358 A1**
(43) Date of publication of application: **11.08.2010**
(21) Application number: 09151776.3
(22) Date of filing: 30.01.2009
(51) Int. Cl.: C08J 3/215, C08J 5/00, C08L 25/06, H01B 1/24

(54) **Conductive polymer composition**

(71) Applicant: Stichting Dutch Polymer Institute, 5612 AB Eindhoven (NL)
(72) Inventor: Koning, Cornelis, 5612 AZ, Eindhoven (NL); Tkalya, Evgeniy, 5612 AZ, Eindhoven (NL)
(74) Representative: Renkema, Jaap

(57) **Abstract**

The present invention relates to a process for the preparation of a conductive polymer composition comprising graphene and the articles obtained by this process.

The process comprises the following steps:
A) contacting graphite oxide in an aqueous medium with a water-soluble or dispersible component, comprising either a water-soluble or dispersible first polymer or a water-soluble or dispersible (conductive) surfactant and subsequently adding a reducing agent to the aqueous medium;
B) mixing the resulting product from step A) with either an aqueous latex of a second polymer, or with (a) water-soluble precursor(s) of a second polymer;
C) removing water from the so obtained mixture;
D) heating the product from step C) to a temperature at which the second polymer flows or where the second polymer is formed from out of its precursor(s); and
E) processing and/or solidifying the product of step D) into a desired form.

## Description

The present invention relates to a process for the preparation of a conductive polymer composition comprising graphene and the articles obtained by this process.

Conductive polymer compositions, comprising graphene (also called graphene sheets) are presently obtained in two ways from pristine graphite. Pristine graphite consists of stacks of graphene sheets. The individual graphene sheets are predicted to have a range of unusual properties. Recent studies have shown that individual graphene sheets have extra ordinary electronic transport properties.

In order to harness these properties for applications the graphene sheets have to be incorporated and homogeneously distributed into the polymer matrix. Although pristine graphite is inexpensive and readily available, it unfortunately does not easily exfoliate to yield individual graphene sheets.

Stankovich et al. (Nature, vol. 442, 20 July 2006, 282-286) show a first way to obtain conductive polymer composition comprising graphene. Stankovich first oxidizes the pristine graphite into graphite oxide, making use of the Hummers method. Subsequently they use a general approach to exfoliate and chemically modify the graphite oxide in the presence of organic isocyanates. Next they reduce the obtained product by N,N dimethylhydrazine in the presence of polystyrene. By means of filtration, washing, drying, crushing and pressing they prepare a conductive polystyrene composition, comprising graphene, exhibiting a percolation treshold of ∼0,1 volume percent graphene for room-temperature electrical conductivity. At only 1 volume percent graphene this composition has a conductivity of ∼0,1 S/m, sufficient for electrical applications.

Hernandez et al. (Nature nanotechnology, vol. 3, September 2008, 563-568) show a second way to obtain conductive polymer compositions, comprising graphene. Hernandez uses liquid-phase exfoliation of pristine graphite in inorganic solvents such as N-methyl-pyrrolidone to produce individual graphene sheets in concentrations up to ∼0,1 mg/ml. By adding polystyrene to the graphite dispersion in N-methyl pyrrolidone, subsequent sonification for 15 minutes and vacuum filtration, composite films were obtained. These conductive polystyrene composite films have high volume-fractions of graphene sheets. At 60-80 volume percent of graphene sheets in the composite films they measured conductivities of ∼100 S/m.

The reported ways for obtaining a conductive polymer composition comprising graphene give compositions having either low conductivity at low graphene loading or a high conductivity at a high graphene loading. Compositions having high graphene loadings are expensive and show poor mechanical, elastic and processing properties due to the high filler loading.

There is a need for compositions having a high conductivity at low graphene loadings. It is an object of the present invention to provice such polymer compositions and a process to make such polymer compositions.

The present invention relates to a process for the preparation of a conductive polymer composition, comprising a polymer and graphene, wherein the process comprises the following steps:
A) contacting graphite oxide in an aqueous medium with a water-soluble or dispersible component, comprising either a water-soluble first polymer or a water-soluble or dispersible (conductive) surfactant and subsequently adding a reducing agent to the aqueous medium;
B) mixing the resulting product from step A) with an aqueous latex of a second polymer or with (a) water soluble or dispersible precursor of a second polymer;
C) removing water from the so obtained mixture;
D) heating the product from step C) to a temperature at which the second polymer flows or where the second polymer is formed out of its precursor; and
E) processing and/or solidifying the product of step D) into a desired form.

### Step A): preparing a dispersion of graphene sheets via the reduction of exfoliated graphite oxide in an aqueous medium.

In the process of the present invention the use of graphite oxide is preferred, as graphite oxide is hydrophilic in nature and therefore readily dispersed in an aqueous medium. Moreover graphite oxide is easily obtained by the oxidation of pristine graphite using the Hummers method (Hummers W, Offerman R. Preparation of graphite oxide; J. Am. Chem. Soc., 1958, 80:1339*).* The obtained graphite oxide is preferably dispersed in an aqueous medium via ultrasonic treatment in the presence of a water-soluble or dispersible first polymer or a surfactant. Exposure to this ultrasonic treatment needed for an effective exfoliation of the graphene sheets can be easily determined by a man skilled in the art. At least 1 minute and 1000 J (J=Joules) is required for proper dispersion, more preferably at least 5 minutes and 3500 J is required and most preferably at least 10 minutes and 7000 J is required. Generally, the ultrasonic treatment can be performed in less then 1 hour and with less than 40.000 J.

Graphite oxide concentration may vary as long as aggregation is prevented. Suitable concentration may vary from 0,1 gram to 100 gram of graphite oxide in 1 l of water. Preferably 0,2 gram to 10 gram of graphite oxide is used and most preferable about 0,5 - 5 grams of graphite oxide is used in 1 I of water.

The water-soluble first polymer should preferably be of a hydrophilic nature, either from natural or synthetic origin. In the process according to the present invention it is advantageous that the first water soluble polymer is PSS (poly(sodium 4-styrenesulfonate)).

It can be advantageous to further improve the incorporation of the water-soluble first polymer by adding an electrolyte (like a water-soluble salt for example sodium-chloride in step A). This improves the dispersability of graphene sheets in the matrix of the conductive polymer composition.

In step A) also a water-soluble surfactant can be used to effectively exfoliate the graphene sheets. Preference is given to a salt of a (polymeric) hydrocarbon sulphate or sulphonate, like sodiumdodecyl sulphate (SDS) or sodiumdodecyl sulphonate, or the sodium-, lithium- or potassium salt of polystyrenesulphonate (e.g. PSS), or a polyalkyleneoxide based surfactant. The surfactant may also be electrically conductive. E.g. a commercially available dispersion of a mixture of poly (3,4 ethylene dioxy thiophene) (PEDOT) and PSS may be used to stabilize the graphene dispersion.

The process of the contacting part of step A) is performed by contacting the essential ingredients (the water-soluble polymer or surfactant, and graphite oxide) in any order in water or an aqueous solution.

The temperature at which the contacting of step A) is performed is not critical. Temperatures between room temperature and 75 °C are very well suited.

It is essential that the contacting part of step A) is performed before adding a reducing agent. The reducing agent reduces the graphite oxide to graphene, making it very hydrophobic. If the water-soluble polymer or surfactant is not present before the reducing starts, the formed graphene will gradually agglomerate. This agglomeration turned out to be irreversible as was described in the publication of Stankovich *et al.*

Reducing agents which can be used are those capable of reducing graphite oxide to graphene, wherein the graphene sheets have conductive properties. Known reduction agents for this purpose are hydrazine and its derivates, such as N,N-dimethylhydrazine and hydrazine.

The reduction agents may be added in diluted form or (almost) pure. Solvents such as DMF may be used as diluents.

The process of the present invention uses hydrazine or one of its derivates or a combination thereof in step A). Preferably hydrazine is used.

The process of the present invention performs the reduction step at reaction temperatures typically between 80 °C and 180 °C during the adding part of step A). Preferably the reduction step is performed at reaction temperatures between 105 °C and 150 °C, more preferably between 110 °C and 150 °C, and most preferably between 80 °C and 180 °C.

The process of the present invention keeps the duration of the reduction step between 10 and 200 hours during the step A) when the reaction temperature is kept constant. Preferably the reduction step lasts between 20 and 150 hours, more preferably between 30 and 120 hours and most preferably between 40 and 100 hours. It has been found that a reduction time of 20-25 hours already gives a significant improvement of the conductivity of the polymer composite over reported values of Stankovich *et al.*
Surpringly it has been found that a prolonged reduction time between 40 and 150 hours gives an unexpectedly increase in conductivity, as can be seen in the examples.

The resulting product of step A) can contain up to 75 weight% of graphene sheets, coated with the said first polymer or surfactant. In this process, step A) the mass ratio of the first polymer or surfactant to the graphene sheets can range from 0.05 to 20, preferably between 0,1 and 10.

Step B): The product resulting from step A) is brought into contact with an aqueous latex of a second polymer. This second polymer is the polymer which constitutes the matrix of the conductive polymer composition, in which the graphene sheets are well-dispersed. Every aqueous polymer latex known to the skilled man can be used. Preference is given to a second polymer being selected from the group comprising polyacrylates, styrene-based (co-)polymers, butadiene-based (co)polymers, polycarbonate, acrylonitrile-based (co-)polymers, (halogen-containing) polyolefins (like polyethylene or polypropylene), and polyamides.

Also (a) precursor(s) for such a second polymer can be used, as they are, or in the form of an aqueous solution thereof which can be converted to the second polymer via an emulsion polymerization. Preference can be given, for instance when a nylon is used as the second polymer, to the use in this step B) of either the monomer of said polymer (like ε-caprolactam when using nylon 6 as the final matrix material), or to the use of a salt of adipic acid and hexamethylene diamine, or diaminobutane, when nylon 6,6 or nylon 4,6 as the matrix material is aimed at. The skilled man is aware of the precursor(s) needed for such a second polymer. A preference is given to the use in this step B) of ((a) precursor(s) of) a polyamide or a polystyrene based polymer.

The temperature of this step B) generally lies between 10 and 150°C. The pressure is generally atmospheric, but may be increased in order to accommodate for processability in this step B) or in the following step C). The residence time for this step B) is not critical, and generally does not exceed 1 hour.

Although both thermoset polymers as well as thermoplastic polymers can be used as the matrix of the conductive polymer composition, the preference is given to the use of a (semi-) crystalline or amorphous thermoplastic polymer.

Step C): the mixture obtained in process step B), according to the present invention, is treated to remove (substantially all of the) water. There are different physical methods available to the skilled man to achieve this removal. Out of these methods, a preference is for performing step C) by means of evaporation, freeze-drying, or flash-drying.

Step D): is intended to realize a homogeneous dispersion of the graphene sheets in the second polymer. When in the preceeding steps use is made of (a) precursor(s) for this second polymer, this step D) is also intended to form the second polymer from this/these precursor(s). In the case that the second polymer is a thermoplastic polymer, the temperature in this step D is chosen such that it is 10-100°C above the melting point (in case of a (semi-)crystalline second polymer), or above the glass point (in case of an amorphous second polymer). In the case that the second polymer is a thermoset polymer, the temperature in this step D) is chosen such, that this second polymer can be formed from its precursor(s), during which formation also step E) of the process of the present invention is applied.

In all cases, the man skilled in the art is aware of the process conditions under which this step D) is to be performed, depending on the nature of the second polymer.

Step E): of the process of the present invention is the processing and/or solidification of the product of step D) in a desired form. This step E) can be a molding step, a pelletizing step, an injection or compression molding step, or any known step to form a solidified polymer object.

The process of the present invention results in a conductive polymer composition, wherein the properties of the graphene sheets obtained are retained: the graphene sheets are hardly or not damaged, as a result of which they retain their original length as well as their original aspect ratio (AR) (ratio of length to diameter of the graphene sheets). The graphene sheets are essentially individually dispersed in the polymer matrix. The polymer therefore has improved stiffness as well as better conductivity properties.

The invention also relates to a conductive polymer composition comprising graphene, obtainable by the process of the present invention. With the (process of the) present invention polymer compositions are obtainable having a conductivity at or higher than 2 S/m at graphene loadings between 0,1 and 10 vol% relative to the total composition. Preferably the polymer composition has a conductivity higher than 5 S/m, or higher than 10 S/m at a graphene loading of less than 10 vol%, preferably less than 5 vol% more preferably between 0,5 and 3 vol%.

In order to convert the loadings of graphene in the polymer composition both densities of the polymer matrix as well as the graphene has to be known. The density of a thermoset polymer usually is between 0,9 and 1,1 g/cm³. The density of the graphene sheets is assumed to be ∼2,2 g/m³. Hence a man skilled in the art should easily convert percentage of weight to volume and vice versa.

The conductive polymer composition comprising graphene of the present invention can be used for several applications in which the improved conductivity properties can be exploited. Reference can be given to anti-static or shielding applications (like electromagnetic interference shielding); conducting body panels for the automotive industry with a better surface appearance than glass fibre filled polymers; nano-electric devices (such as thin-film transitors), and others.

The invention is illustrated by the following non-limiting Experimental part and Examples.

### Experimental Part

Materials and General Experimental Procedure.

### Materials

Pristine graphite, PSS (Poly(sodium 4-styrenesulfonate), 70.000 g/mol), hydrazine hydrate (98%) and PS (Polystyrene, peak molar mass 1.000.000 g/mol), were used.

### General Experimental Procedure

### 1) Preparation of Graphite Oxide. (Hummers Method, Hummers W, Offerman R. Preparation of graphitic oxide. J Am Chem Soc 1958; 80: 1339)

The graphite oxide was prepared by stirring 1 g of graphite powder and 0,5 g of sodium nitrate in 25 ml of concentrated sulfuric acid. The ingredients were mixed and then 3 g of potassium permanganate were added to the suspension. As the reaction progressed the mixture became brownish-grey in color. At the end of 2 hours, 45 ml of water was slowly added causing the temperature to increase from room temperature value to 90-100 °C. The diluted suspension, brown in color, was maintained at this temperature for 15 minutes. Then the suspension was further diluted to 200 ml with hot water and treated with hydrogen peroxide. Upon treatment with hydrogen peroxide the suspension turned bright yellow. The suspension was filtered resulting in a yellow-brown filter cake. The filtering was conducted while the suspension was still warm. After filtering, the product was washed with water and dried under vacuum.

### 2) Reduction of Graphite Oxide (following the method described in: S. Stankovich et al., J. Materials Chem., Vol. 16, (2006), 155-158).

The dispersion of Graphite Oxide 1mg/ml in water was prepared via ultrasonic treatment (12 min., total energy provided 7400-8000 J). After that, high molecular weight poly(sodium 4-styrenesulfonate) (PSS, 70 000 g/mol; 10/1 weight ratio PSS/Graphite Oxide) was added and the mixture was stirred till complete dissolution of PSS in water. Then hydrazine hydrate (98%) was added (1ml per 100 mg of Graphite Oxide) and the solution was heated at 115 °C under reflux for a certain period, after which the brown-colored dispersion turned black. The black product was isolated by filtration and dried under vacuum.

### 3) Preparation of Nanocomposites.

Dry product of 2) (graphene covered with PSS) was put into water (0,5 mg of graphene + PSS per ml water), yielding an inhomogeneous dispersion. This dispersion was sonicated until maximum exfoliation was reached (32 min, energy provided 30.000 J), which was monitored by recording the UV-Vis absorbance as a function of sonication energy using the method described by N. Grossiord et al. (Anal. Chem., Vol. 77, (2005), 7094-7108). Then different amounts of polystyrene latex (Peak molar mass around 1.000.000 g/mol, 28 % solid content) were added to the black homogeneous dispersion and the double dispersion was stirred for a few minutes. The mixture of graphene dispersion and latex particles was freeze-dried under vacuum. The resulting powder was degassed and transformed into films by compression molding. The latter consisted of first short heating of the powder to reach the desired working temperature (Starting from 160 °C to 180 °C within 20 min). This heating was followed by a degassing step and two pressings at 40 bars for 20 seconds (at 180 °C). The system was finally pressed at 100 bars for 2 minutes at 180 °C.

### 4) Conductivity measurements

The obtained conductive polymer composition from 3) were measured. Room temperature electrical conductivity measurements were carried out using a standard 4 points configuration DC-Conductivity Keithly Electrometer.

### Examples

Experiments were performed according to the above described general experimental procedure. Two conditions were varied in the experiments; the duration under reflux after heating the solution as mentioned in 2) of the general experimental procedure and the different amounts of polystyrene latex added to the black homogeneous dispersion as mentioned in 3) of the general experimental procedure.

Experiments 1 to 15 were performed for 24 hours under reflux after heating the solutions as mentioned in 2) of the general experimental procedure. The different amounts of polystyrene latex added to the black homogeneous dispersion as mentioned in 3) of the general experimental procedure were choosen in a way to obtain the mass percentages as can be read from table 1.

Experiments 16 to 33 were performed for 72 hours under reflux after heating the solutions as mentioned in 2) of the general experimental procedure. The different amounts of polystyrene latex added to the black homogeneous dispersion as mentioned in 3) of the general experimental procedure were choosen in a way to obtain the mass percentages as can be read from table 2.

### Results and Discussion

### Results

Table 1 and 2 show the results obtained by the conductivity measurements of Experiments 1-15 and 16-33 respectively. The Filler Fractions mentioned in the tables are the percentage by mass of graphene in the conductive polymer composition.

**Table 1. Conductivity measurements for Experiments 1-15.**

| **Reduction at 24 hours** | | |
|---|---|---|
| Example# | Filler Fraction, vol% | Conductivity, S/m |
| 1 | 0,1 | 0 |
| 2 | 0,2 | 0 |
| 3 | 0,3 | 0 |
| 4 | 0,4 | 0 |
| 5 | 0,5 | 0 |
| 6 | 0,6 | 0 |
| 7 | 0,7 | 0 |
| 8 | 0,8 | 0 |
| 9 | 0,9 | 0 |
| 10 | 1 | 1,00E-04 |
| 11 | 1,2 | 0,15 |
| 12 | 1,4 | 0,21 |
| 13 | 1,6 | 0,68 |
| 14 | 1,9 | 0,66 |
| 15 | 2 | 0,65 |

**Table 2. Conductivity measurements for Experiments 16-33.**

| **Reduction at 72 hours** | | |
|---|---|---|
| Example# | Filler Fraction, vol% | Conductivity, S/m |
| 16 | 0,1 | 0 |
| 17 | 0,2 | 0 |
| 18 | 0,3 | 0 |
| 19 | 0,4 | 0 |
| 20 | 0,5 | 0 |
| 21 | 0,6 | 0 |
| 22 | 0,7 | 0 |
| 23 | 0,8 | 0 |
| 24 | 0,9 | 2,00E-04 |
| 25 | 1 | 0,0037 |
| 26 | 1,1 | 0,43 |
| 27 | 1,2 | 2,2 |
| 28 | 1,3 | 3,4 |
| 29 | 1,4 | 4,7 |
| 30 | 1,5 | 9,5 |
| 31 | 1,6 | 15,6 |
| 32 | 1,8 | 15,5 |
| 33 | 1,9 | 16 |

## Claims

1. Process for the preparation of a conductive polymer composition, comprising a polymer and graphene, wherein the process comprises the following steps:
A) contacting graphite oxide in an aqueous medium with a water-soluble or dispersible (conductive) component, comprising either a water-soluble or dispersible first polymer or a water-soluble surfactant and subsequently adding a reducing agent to the aqueous medium;
B) mixing the resulting product from step A) with either an aqueous latex of a second polymer, or with (a) water-soluble or dispersible precursor(s) of a second polymer;
C) removing water from the so obtained mixture;
D) heating the product from step C) to a temperature at which the second polymer flows or where the second polymer is formed from out of its precursor(s); and
E) processing and/or solidifying the product of step D) into a desired form.

2. Process according to claim 1, wherein the water soluble surfactant is a polymeric surfactant, or a salt of a hydrocarbon sulphate or sulphonate.

3. Process according to claim 1, wherein the first polymer is Gum Arabicum.

4. Process according to anyone of claims 1-3, wherein the second polymer is selected from the group comprising polyacrylates, styrene-based (co-) polymers, butadiene-based (co-) polymers, polycarbonate, acrylonitrile-based (co-) polymers, (halogen-containing) polyolefins, and polyamides.

5. Process according to claim 4, wherein the second polymer is (originating from (a) precursor(s) of) a polyamide or a polystyrene-based polymer.

6. Process according to anyone of claims 1-5, wherein the second polymer is a (semi-) crystalline or amorphous thermoplastic polymer.

7. Process according to anyone of claims 1-6, wherein step C) is performed by means of evaporation, freeze-drying, or flash-drying.

8. Process according to anyone of claims 1-8, wherein the temperature in step D) is 10-100°C above the melting or glass point of the second polymer.

9. Conductive polymer composition, obtainable by a process according to anyone of claims 1-8.

10. Conductive polymer composition, comprising a polymer and graphene, wherein the polymer composition has a conductivity of more than 2 S/m and wherein the amount of graphene is between 0,1 and 10 % by weight.

11. Conductive polymer composition according to anyone of claims 9-10, wherein the polymer matrix is selected form a polyamide or a polystyrene based polymer.
